# DEMANDE DE BREVET EUROPEEN

(11) **EP 1 777 373 A1**
(43) Date de publication de la demande: **25.04.2007**
(21) Numéro de dépôt: 06120598.5
(22) Date de dépôt: 13.09.2006
(51) Int. Cl.: F01D 11/24, F01D 25/10

(54) **Procédé et système de pilotage de jeu au sommet d'aubes de rotor de turbine dans un moteur à turbine à gaz**

(30) Priorité: 14.09.2005 FR 0509387
(71) Demandeur: SNECMA, 75015 Paris (FR)
(72) Inventeur: Philippot, Vincent, 77176 Savigny (FR)
(74) Mandataire: Joly, Jean-Jacques

(57) **Abrégé**

Le jeu (18) entre des sommets d'aubes mobiles (16) d'un rotor de turbine d'un moteur à turbine à gaz et un anneau de turbine (22) d'un carter externe entourant les aubes est augmenté par accroissement du diamètre interne de l'anneau de turbine de façon temporaire, lorsque la turbomachine fonctionne au ralenti et/ou en régime élevé, afin d'éviter ou de minimiser l'usure en sommets d'aubes par venue en contact avec l'anneau de turbine au passage du ralenti à un régime supérieur ou en fonctionnement à régime élevé. L'augmentation de jeu est réalisée par chauffage du carter externe, notamment par alimentation en courant électrique d'au moins un circuit résistif (30) porté par le carter externe.

## Description

### Arrière-plan de l'invention

L'invention se rapporte aux turbines de turbomachines pour moteurs à turbine à gaz, et plus précisément au pilotage du jeu entre les sommets d'aubes mobiles d'un rotor de turbine et un anneau de turbine d'un carter externe fixe entourant les aubes.

Dans une turbine, le jeu radial en sommet d'aube mobile est un paramètre important influant sur la performance de la turbomachine. Plus le jeu est faible en fonctionnement, plus la performance de la turbine est élevée.

Les jeux en sommet d'aube sont dépendants des différences des variations dimensionnelles entre les parties tournantes : disque et aubes formant le rotor de turbine, et les parties fixes : carter de turbine, dont l'anneau, ou plus précisément les segments d'anneaux de turbine, qu'il comprend. Ces variations dimensionnelles sont d'origine thermique et liées aux variations de température des aubes, du disque et du carter, et d'origine mécanique, notamment sous l'effet de la force centrifuge s'exerçant sur le disque et les aubes et des pressions s'exerçant sur les parties fixes et tournantes.

Afin de limiter l'endommagement des sommets d'aubes par venue en contact de celles-ci à leurs sommets avec l'anneau de turbine, ce dernier est muni d'une couche de matériau abradable sur sa face tournée vers les aubes. L'usure des aubes au sommet est alors limitée, les sommets d'aubes creusant un sillon dans le matériau abradable, mais n'est pas totalement éliminée.

En l'absence de pilotage actif du jeu en sommet d'aubes, le jeu est réglé à une valeur telle que l'usure maximale des aubes pendant la vie du moteur reste dans une limite acceptable. Cette usure est fonction de la consommation de jeu maximale. Par consommation de jeu, on entend ici la différence entre les variations dimensionnelles radiales des aubes et de l'anneau de turbine. On va donc régler le jeu en fonction de la consommation de jeu maximale pouvant se produire pendant l'exploitation de la turbomachine.

Des systèmes de pilotage de jeu sont bien connus qui ont pour but de limiter le jeu autant que possible afin d'optimiser la performance de la turbine. Ils fonctionnent généralement en dirigeant vers la surface externe de l'anneau de turbine ou de la partie de carter qui le supporte de l'air de refroidissement prélevé au niveau d'un compresseur et/ou d'une soufflante de la turbomachine. Ces systèmes de pilotage de jeu, qui sont contrôlés par exemple par un système de régulation à pleine autorité (ou FADEC) de la turbomachine, sont généralement complexes.

Avec les moteurs aéronautiques à turbine à gaz, il existe plusieurs régimes de fonctionnement possibles dont : un régime de point croisière en vol ; un régime de ralenti en vol, inférieur au régime de point croisière ; un régime de ralenti, inférieur au régime de ralenti en vol ; et un régime élevé supérieur au régime de point croisière. Le régime de point croisière est le régime nominal adopté pendant la plus grande partie d'un vol. Le régime de ralenti en vol est adopté notamment en phase d'approche avant atterrissage. Le régime ralenti est utilisé principalement au sol. Quant au régime élevé, il est utilisé au décollage et aux phases d'ascension.

Il existe une situation conduisant à une consommation de jeu très importante, à savoir le passage d'une phase de régime ralenti à une phase ultérieure d'accélération rapide, et plus particulièrement lorsque la phase de ralenti succède à une phase de fonctionnement à un régime supérieur.

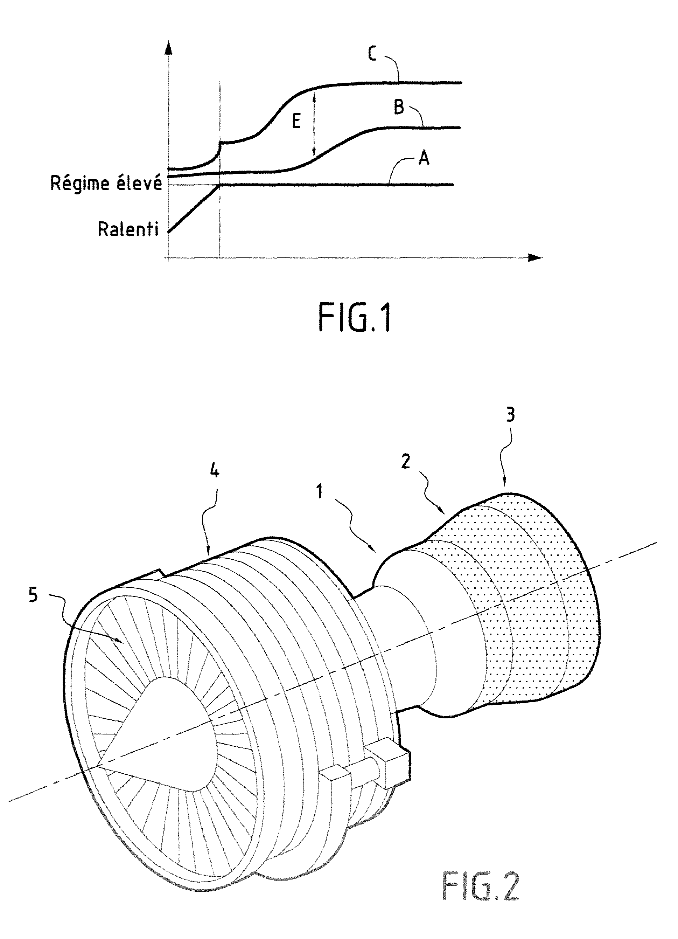

En effet, en cas de passage au régime ralenti à partir d'un régime supérieur s'accompagnant d'une diminution de température, les variations dimensionnelles radiales des parties tournantes à partir de la situation à régime supérieur sont lentes en raison de l'inertie thermique du disque de rotor qui a une masse importante. Par contre, le carter, moins massif, a une variation dimensionnelle plus rapide et parvient assez vite dans une situation stabilisée au ralenti. Le jeu au sommet d'aubes est donc faible. En cas alors d'une re-accélération vers un régime supérieur, la variation dimensionnelle radiale résultant de la force centrifuge appliquée aux parties tournantes est immédiate et précède la variation dimensionnelle radiale du carter due à l'élévation de température. Il en résulte une surconsommation transitoire importante du jeu avant stabilisation dimensionnelle du carter et des parties tournantes. Cela est illustré par la figure 1 où les courbes A, B et C montrent respectivement la variation de régime de fonctionnement d'une turbomachine de ralenti à régime supérieur (par exemple de régime ralenti à régime élevé au décollage), la variation dimensionnelle de l'anneau de turbine et la variation dimensionnelle en sommet d'aube, la différence E entre les courbes B et C représentant la consommation (ou variation) de jeu. On observe effectivement un pic de consommation de jeu peu après le passage au régime élevé.

Une autre situation conduisant à une consommation de jeu importante est celle d'un passage à régime élevé, les variations dimensionnelles du rotor d'origine mécanique (force centrifuge) précédant les variations dimensionnelles de l'anneau de turbine d'origine thermique.

Une solution ne peut être apportée à ces problèmes par pilotage de jeu par impact d'air de refroidissement sur l'anneau de la turbine.

Dans le cas où il n'y a pas de pilotage actif du jeu en sommet d'aube, un réglage du jeu de manière à éviter en toutes circonstances un contact entre sommets d'aubes et anneau de turbine ne peut être envisagé car cela conduirait à une valeur de jeu trop importante en régime de point croisière, pénalisant la performance de la turbine. Une usure des sommets d'aubes en cas de sur-consommation du jeu doit alors être acceptée.

Une augmentation de jeu entre sommets d'aubes et carter, par chauffage électrique du carter, est envisagée dans le brevet US 5 630 702, mais pour un compresseur de turbomachine industrielle et dans le cas d'un re-démarrage à chaud.

Quant au document DE 43 09 199 A1, il prévoit la possibilité de commander en température des anneaux de turbine individuels d'une turbine multi-étages au moyen d'air ou autre fluide de refroidissement ou au moyen d'un chauffage électrique par induction.

### Objet et résumé de l'invention

L'invention a pour but d'apporter une solution au problème précité lié à la sur-consommation du jeu au sommet d'aube au passage d'un mode ralenti à un régime supérieur ou au passage en fonctionnement à régime élevé, dans une turbine de moteur à turbine à gaz.

Ce but est atteint grâce à un procédé de pilotage de jeu entre des sommets d'aubes mobiles d'un rotor de turbine d'un moteur à turbine à gaz et un anneau de turbine d'un carter externe entourant les aubes, procédé selon lequel, conformément à l'invention, le jeu est augmenté par accroissement du diamètre interne de l'anneau de turbine de façon temporaire, lors d'une phase de régime ralenti et/ou d'une phase de régime élevé, afin d'éviter ou de minimiser l'usure en sommets d'aubes par venue en contact avec l'anneau de turbine suite à une accélération.

Par régime ralenti, on entend ici un régime inférieur à un régime nominal de fonctionnement de la turbomachine et par régime élevé, on entend un régime supérieur au régime nominal. Dans un moteur d'avion à turbine à gaz, le régime ralenti est un régime inférieur au régime de point croisière en vol, éventuellement inférieur au régime ralenti en vol tandis que le régime élevé est un régime supérieur au régime de point croisière en vol.

Ainsi, il est possible d'avoir un jeu en sommet d'aube permettant une très bonne performance de la turbine en régime nominal, intermédiaire entre régime ralenti et régime élevé, sans craindre, dans certaines situations, une surconsommation de jeu, susceptible d'entraîner une usure en sommet d'aube par contact avec l'anneau de turbine. De plus, l'augmentation de jeu est réalisée dans une phase de fonctionnement qui ne pénalise pas réellement les performances, à savoir la phase de ralenti, ou dans une phase de fonctionnement de durée limitée, à savoir le régime élevé.

L'augmentation de jeu est avantageusement réalisée par chauffage, notamment par chauffage par application d'énergie électrique.

Le chauffage peut être effectué par alimentation en courant électrique d'au moins un circuit résistif porté par le carter externe ou par couplage inductif avec le carter externe ou au moins un induit porté par celui-ci.

L'invention vise aussi un système de pilotage de jeu entre des sommets d'aubes mobiles d'un rotor de turbine d'un moteur à turbine à gaz et un anneau de turbine d'un carter externe entourant les aubes, système comprenant un dispositif apte à provoquer une augmentation du jeu par accroissement du diamètre interne de l'anneau de turbine et un circuit apte à commander le fonctionnement dudit dispositif lors d'une phase de régime ralenti et/ou lors d'une phase de régime élevé, et à interrompre le fonctionnement dudit dispositif lors des autres régimes de fonctionnement.

Selon une particularité du système, le dispositif apte à provoquer une augmentation de jeu est un dispositif de chauffage qui peut être électrique, notamment résistif ou inductif.

Selon un mode particulier de réalisation, l'énergie électrique nécessaire au fonctionnement du dispositif de chauffage est fournie par un générateur couplé au rotor de turbine.

L'invention vise encore un moteur à turbine à gaz muni d'un système de pilotage de jeu tel que défini ci-avant. Le circuit apte à commander le fonctionnement du dispositif d'augmentation de jeu est alors incorporé avantageusement dans un système de régulation à pleine autorité (FADEC) du moteur.

### Brève description des dessins

L'invention sera mieux comprise à la lecture de la description faite ci-après, à titre indicatif mais non limitatif, en référence aux dessins annexés, sur lesquels :
- la figure 1, déjà décrite, montre des courbes illustrant respectivement une variation de régime de fonctionnement et les variations correspondantes de dimension radiale de stator et de dimension radiale de rotor dans une turbine de moteur à turbine à gaz ;
- la figure 2 montre de façon très schématique un moteur à turbine à gaz ;
- la figure 3 est une vue schématique partielle en coupe d'une turbine d'un moteur à turbine à gaz selon un mode de réalisation de l'invention ;
- la figure 4 est une vue schématique de détail en perspective d'une partie de carter de la turbine de la figure 3 ;
- la figure 5 est un schéma d'un circuit de commande du fonctionnement d'un dispositif de chauffage associé au carter de la turbine de la figure 3 ; et
- la figure 6 est une vue schématique partielle en coupe d'une turbine d'un moteur à turbine à gaz selon un autre mode de réalisation de l'invention.

### Description détaillée de modes de réalisation de l'invention

Comme cela est bien connu, dans un moteur à turbine à gaz, une turbine haute-pression 1 (figure 2) reçoit des gaz de combustion issus d'une chambre de combustion 2 par l'intermédiaire d'un distributeur de turbine et fournit ces gaz à une turbine basse-pression 3 avant éjection. La turbine haute-pression est montée sur un arbre auquel est couplé un rotor de compresseur haute-pression 4 alimentant la chambre de combustion en air sous pression tandis que la turbine basse-pression est montée sur un arbre auquel est couplée une soufflante 5 située en entrée du moteur.

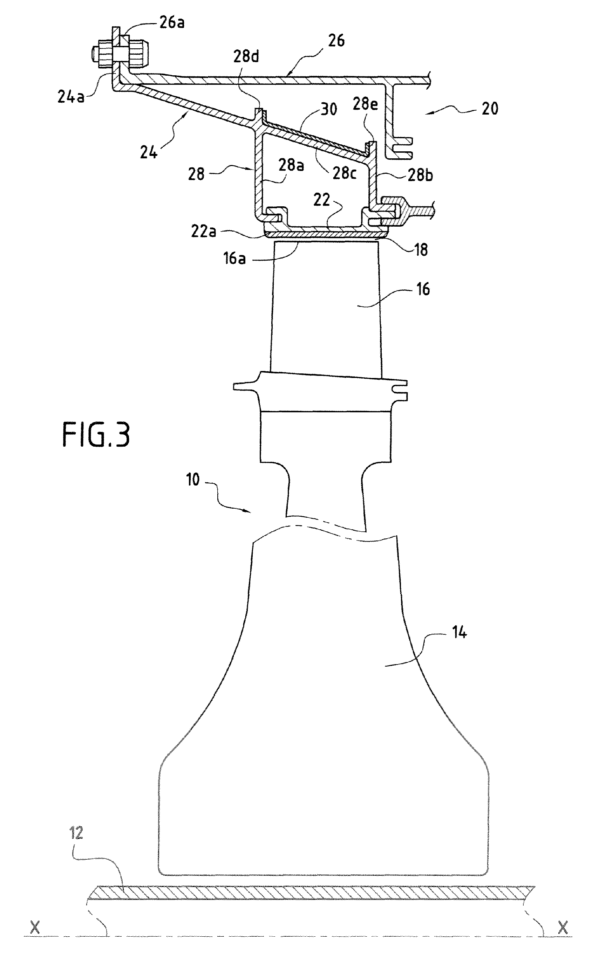

Comme montré sur la figure 3, la turbine haute-pression comporte un rotor de turbine 10 couplé à un arbre 12 ayant pour axe X-X l'axe du moteur. Le rotor 10 comprend un disque 14 couplé à l'arbre 12 par des moyens mécaniques non représentés, et une pluralité d'aubes mobiles 16 qui s'étendent radialement à partir du disque 14 et sont montées sur ce dernier.

Le rotor 10 est entouré par un carter de turbine 20 comprenant un anneau de turbine 22 porté par un carter externe de turbine 24, lui-même fixé à une enveloppe externe 26 par des brides 24a, 26a reliées l'une à l'autre.

L'anneau de turbine 22 est formé d'une pluralité de secteurs ou segments adjacents. Du côté interne, l'anneau 22 est muni d'une couche 22a de matériau abradable et entoure les aubes 16 en ménageant avec les sommets 26a de celles-ci un jeu 18.

Les secteurs de l'anneau 22 sont supportés par une partie annulaire 28 du carter externe 24 ayant une section sensiblement en U, avec deux ailes radiales 28a, 28b dirigées vers l'axe X-X et un fond 28c. A leurs extrémités, les ailes 28a, 28b sont munies de rebords permettant le montage des secteurs d'anneau, de façon connue en soi.

Conformément à l'invention, le carter de turbine 20 est muni d'un dispositif permettant, de façon commandée, d'accroître le diamètre interne de l'anneau de turbine 22.

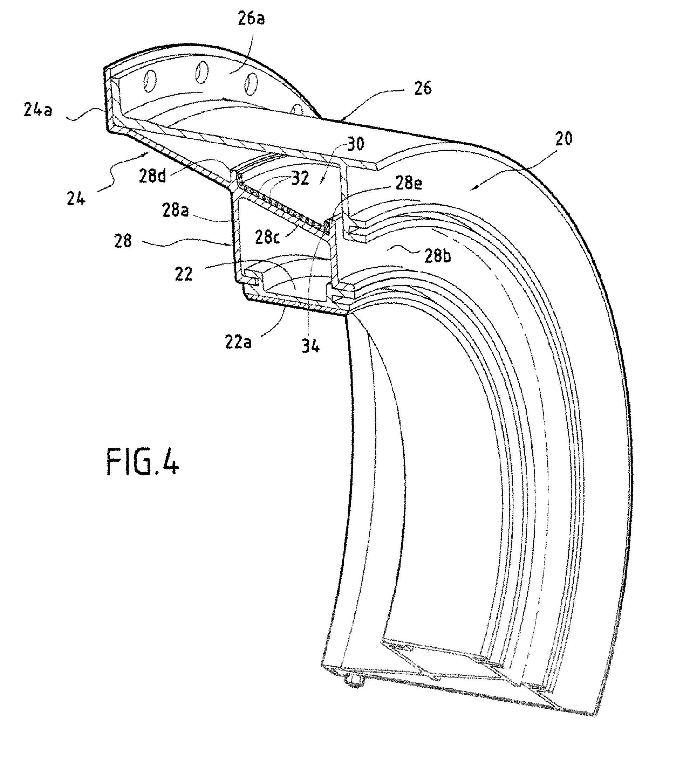

Dans l'exemple illustré par les figures 3 et 4, l'accroissement du diamètre interne de l'anneau de turbine est réalisé par dilatation thermique grâce à un circuit chauffant 30 de type résistif associé au carter externe de turbine 20. Le circuit 30 est par exemple sous forme d'une nappe avec un ou plusieurs conducteurs 32 noyés dans une couche isolante 34. Par souci de commodité et d'efficacité, la nappe résistive 30 est fixée sur le carter externe 24 du côté extérieur de la partie 28 supportant les secteurs d'anneau de turbine. Comme le montrent les figures 2 et 3, la nappe résistive 30 recouvre la face externe du fond 28c ainsi que les faces en regard de deux ailes de rigidification 28d, 28e qui font saillie radialement vers l'extérieur à partir du fond 28c, dans le prolongement des ailes 28a, 28b. D'autres emplacements pourraient être adoptés pour le circuit 30, mais de préférence au regard de l'anneau de turbine et dans une partie non proche des zones les plus chaudes.

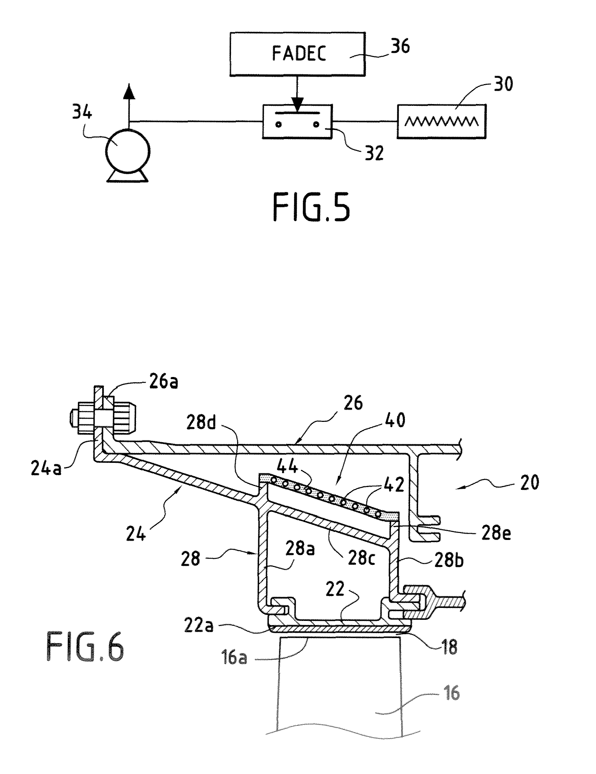

Le circuit 30 est alimenté par du courant électrique produit par un alternateur couplé à l'arbre 12 du rotor 10, alternateur fournissant une puissance électrique à l'avion. La liaison électrique est réalisée par un conducteur (non représenté) traversant l'enveloppe externe 26. Comme le montre schématiquement la figure 5, un circuit interrupteur commandé 32 est interposé entre l'alternateur 34 et le circuit résistif 30. La commande de l'interrupteur 32 est assurée par des signaux de commande produits par le système de régulation à pleine autorité, ou FADEC 36 du moteur.

Le FADEC 36 est programmé pour commander la fermeture de l'interrupteur 32 lors des phases de régime ralenti et de régime élevé et pour commander l'ouverture de l'interrupteur 32 lors de toute autre phase de fonctionnement. Par phase de régime ralenti, on entend de préférence une phase de régime inférieur au régime de ralenti en vol et par phase de régime élevé, on entend une phase de régime supérieur au régime de point croisière en vol. Une alimentation du circuit 30 pourrait toutefois être prévue aussi en phase de régime de ralenti en vol.

Ainsi, pendant les phases de régime ralenti et de régime élevé, on maintient, par l'alimentation électrique du circuit 30, un jeu 18 accru aux sommets des aubes. La dégradation de performance du moteur qui en résulte n'est pas pénalisante pendant de telles phases généralement transitoires. On dispose ainsi d'une marge plus importante de jeu susceptible d'être consommée au passage d'une phase de régime ralenti à une phase de régime supérieur ou au passage à une phase de régime élevé, sous l'effet de la force centrifuge agissant immédiatement sur les aubes. L'usure aux sommets d'aubes est par conséquent minimisée, tout en autorisant un jeu favorable pour la performance de la turbine en phase de régime de point croisière en vol.

Le circuit 30 peut être réalisé en une seule partie, ou en plusieurs parties (ou nappes) juxtaposées alimentées électriquement en série ou en parallèle.

La figure 6 illustre une variante de réalisation dans laquelle le chauffage est produit par couplage inductif. Un inducteur 40, constitué par un ou plusieurs bobinages 42 noyés dans un isolant 44 est associé au carter externe de turbine 24 pour pouvoir coupler inductivement avec la partie 28 de celui-ci ou au moins une partie de cette dernière. En cas de couplage inductif direct insuffisant avec le matériau du carter externe 24, on pourra associer à celui-ci un élément formant inducteur, par exemple fixé du côté extérieur de la partie 28 de support des secteurs d'anneau.

Bien que l'on ait envisagé un accroissement du diamètre interne de l'anneau de turbine lors des phases de régime ralenti et de régime élevé, cet accroissement pourra être commandé pour l'un ou l'autre seulement de ces deux régimes. En outre, le pilotage de jeu par accroissement du diamètre interne de l'anneau lors des phases de régime ralenti et/ou de régime élevé pourra être appliqué aussi à la turbine basse-pression.

L'invention est remarquable en ce qu'elle permet un fonctionnement optimal de la turbine dans les phases de vol à régime de point croisière, qui sont les phases principales, sans faire appel à des systèmes de refroidissements complexes utilisant l'impact d'air de refroidissement, et en ce que le chauffage de l'anneau de turbine, qui nécessite des moyens aisés à mettre en oeuvre, n'est réalisé que pendant des phases de courte durée (régime élevé) ou lors desquelles la performance de la turbine n'est pas sensiblement dégradée par un accroissement du jeu (régime de ralenti).

## Revendications

1. Procédé de pilotage de jeu (18) entre, d'une part, des sommets d'aubes mobiles (16) d'un rotor de turbine d'un moteur à turbine à gaz et, d'autre part, un anneau de turbine (22) d'un carter externe entourant les aubes, **caractérisé en ce que** le jeu est augmenté par accroissement du diamètre interne de l'anneau de turbine de façon temporaire, lors d'une phase de régime ralenti, afin d'éviter ou de minimiser l'usure en sommets d'aubes par venue en contact avec l'anneau de turbine suite à une accélération ultérieure.

2. Procédé de pilotage de jeu (18) entre, d'une part, des sommets d'aubes mobiles (16) d'un rotor de turbine d'un moteur à turbine à gaz et, d'autre part, un anneau de turbine (22) d'un carter externe entourant les aubes, **caractérisé en ce que** le jeu est augmenté par accroissement du diamètre interne de l'anneau de turbine de façon temporaire, lors d'un passage à une phase de régime élevé, afin d'éviter ou de minimiser l'usure en sommets d'aubes par venue en contact avec l'anneau de turbine suite à l'accélération au passage au régime élevé.

3. Procédé selon la revendication 1, **caractérisé en ce que** le jeu est augmenté également par accroissement du diamètre interne de l'anneau de turbine de façon temporaire, lors d'un passage à une phase de régime élevé, afin d'éviter ou de minimiser l'usure en sommets d'aubes par venue en contact avec l'anneau de turbine suite à l'accélération au passage au régime élevé.

4. Procédé selon l'une quelconque des revendications 1 à 3, dans lequel l'augmentation de jeu est réalisée par chauffage du carter externe.

5. Procédé selon la revendication 4, dans lequel le chauffage est produit par application d'énergie électrique.

6. Procédé selon la revendication 5, dans lequel le chauffage est réalisé par alimentation en courant électrique d'au moins un circuit résistif (30) porté par le carter externe.

7. Procédé selon la revendication 5, dans lequel le chauffage est réalisé par couplage inductif entre un inducteur (40) et le carter externe ou au moins un induit porté par celui-ci.

8. Système de pilotage de jeu (18) entre, d'une part, des sommets d'aubes mobiles (16) d'un rotor de turbine d'un moteur à turbine à gaz, et, d'autre part, un anneau de turbine (22) d'un carter externe entourant les aubes, le système comprenant un dispositif (30 ; 40) apte à provoquer une augmentation du jeu par accroissement du diamètre interne de l'anneau de turbine (22), et un circuit apte à commander le fonctionnement dudit dispositif au moins lors d'une des deux phases consistant en une phase de régime ralenti et une phase de régime élevé et à interrompre le fonctionnement dudit dispositif lors des autres régimes du moteur.

9. Système selon la revendication 8, dans lequel ledit dispositif apte à provoquer une augmentation du jeu est un dispositif de chauffage (30 ; 40) du carter externe.

10. Système selon la revendication 9, dans lequel le dispositif de chauffage (30 ; 40) est de type électrique.

11. Système selon la revendication 10, dans lequel le dispositif de chauffage comporte au moins un circuit résistif (30) porté par le carter externe.

12. Système selon la revendication 10, dans lequel le dispositif de chauffage comporte au moins un inducteur (40) couplé avec le carter externe ou un induit porté par celui-ci.

13. Système selon la revendication 10, dans lequel l'énergie électrique nécessaire au fonctionnement du dispositif de chauffage est fournie par un générateur (34) couplé au rotor de turbine.

14. Moteur à turbine à gaz équipé d'un système de pilotage de jeu selon l'une quelconque des revendications 8 à 13.

15. Moteur à turbine à gaz selon la revendication 12 équipé d'un système (36) de régulation moteur à pleine autorité (FADEC), dans lequel ledit circuit apte à commander le fonctionnement du dispositif est incorporé au FADEC.
